# EUROPÄISCHE PATENTSCHRIFT

(11) **EP 2 785 598 B1**
(45) Veröffentlichungstag und Bekanntmachung des Hinweises auf die Patenterteilung: **26.08.2015**
(21) Anmeldenummer: 12791428.1
(22) Anmeldetag: 15.11.2012
(51) Int. Cl.: B65B 17/02, B65B 21/06, B65B 35/54, B65G 47/08, B65B 27/04, B65B 35/36, B65B 35/44, B65G 47/86

(54) **VORRICHTUNG ZUR BILDUNG VON VERPACKUNGSEINHEITEN**
DEVICE FOR FORMING PACKAGING UNITS
DISPOSITIF POUR LA FORMATION D'UNITÉS D'EMBALLAGE

(30) Priorität: 02.12.2011 DE 102011119969; 26.03.2012 DE 102012005925
(43) Veröffentlichungstag der Anmeldung: 08.10.2014
(73) Patentinhaber: KHS GmbH, 44143 Dortmund (DE)
(72) Erfinder: NITSCH, Thomas, 47533 Kleve (Warbeyen) (DE); STUHLMANN, Christopher, 34497 Korbach (DE); VAN WICKEREN, Ernst, 47652 Weeze (DE); WAGNER, Stefan, 46509 Xanten (DE); ZAHN, Volker, 34471 Volkmarsen (DE)
(86) Internationale Anmeldenummer: PCT/EP2012/004745
(87) Internationale Veröffentlichungsnummer: WO 2013/079164

(56) Entgegenhaltungen:
- US-A- 2 968 898
- US-A- 3 225 510
- US-A- 3 864 890
- US-B2- 6 889 485
- US-B2- 7 832 553

## Beschreibung

Die Erfindung bezieht sich auf eine Vorrichtung zur Herstellung von Gebinden gemäß dem Oberbegriff des Patentanspruchs 1, wobei aus einem breitem Behälterstrom mittels Gassenteilung Behälter in mehrere einspurige Behälterströme umgewandelt werden, und mit mindestens einer Abteil- und/oder Verdichtereinheit zum Abteilen und Verdichten einer vorbestimmten Anzahl an Behältern Teilgebinde gebildet und nachfolgend jeweils zu dem späteren Gebinde zusammengefasst werden, wobei Auftragselemente vorgesehen sind, so dass zumindest einer der Behälter des Gebindes ein Haft- oder Klebemittel und/oder einen Haft- oder Klebemittelauftrag zumindest an einer Kontakt- oder Berührfläche aufweist.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Derartige Behälter, z.B. PET-Flaschen weisen einen Kontaktbereich auf, welcher sphärisch gewölbt ausgeführt ist, so dass die Behälter quasi aneinander um eine Umfangsbahn, also an einem "Abrollring" abrollen können. Bei Glasflaschen ist dies bei mehrmaligem Gebrauch der Flasche zum Beispiel mittels des meistens in heller Hervorhebung erkennbaren Abnutzungsringes erkennbar. Derartige "Abrollringe" können bei PET-Flaschen nicht nur im Kopfbereich, sondern auch im Fußbereich angeordnet sein.

Im Detail erfolgt die Herstellung der Gebinde z.B. in der Weise, dass die Behälter auf einer Transportebene eines Transporteurs aufstehend und mit ihrer Behälterachse in vertikaler Richtung oder im Wesentlichen vertikaler Richtung orientiert in einem Massentransport oder in einem breiten Behälterstrom zugeführt werden, in dem die Behälter hinsichtlich markanter Behälter und/oder Ausstattungsmerkmale eine willkürliche Orientierung aufweisen. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen bzw. stabilen Gebinde.

Es ist bekannt, mehrere Artikel jeweils zu einer Artikelgruppe zusammen zu fassen oder zu formieren und aus den Artikelgruppen unter Verwendung von Schrumpffolien (z.B. US 7,726,464 B2) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 A1 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird.

Aufgabe der Erfindung ist es, eine Vorrichtung und ein Verfahren zum Herstellen von Gebinden der Eingangs genannten Art anzugeben, bei dem trotz des Verzichts auf eine umgreifende Folie und/oder trotz des Verzichts auf eine Umreifung in einfacher Weise stets vermieden ist, dass die Artikel bei dem Transport in eine nestende Position gelangen, wobei auch nach der Entnahme eines oder mehrerer Artikel aus einem Gebinde der Zusammenhalt der verbliebenen Artikel im Gebinde erhalten bleibt bzw. wieder hergestellt werden kann.

Zur Lösung dieser Aufgabe ist eine Vorrichtung zur Herstellung von Gebinden entsprechend dem Patentanspruch 1 vorgesehen, wobei ein Lineartransporteur vorgesehen ist, welcher drei Abschnitte, auf die noch eingegangen wird, aufweist und die Behälter von einer Eingangsseite in Richtung zu einer Ausgangsseite transportiert, wobei in einem zweiten Abschnitt des Lineartransporteurs Auftragselemente zum Auftragen von Haft- oder Klebemittel vorgesehen sind, und wobei querverschiebbare und rotierbare Kopfführungen zum Einzelbehältertransport entlang der drei Abschnitte, also entlang des Lineartransporteurs vorgesehen sind, und wobei die Behälter in einem dritten Abschnitt zu dem Gesamtgebinde zusammengeführt und in Richtung zur Austragsseite transportiert werden.

"Haft- oder Klebemittel" in Sinne der Erfindung sind u.a. alle Materialien oder Massen, mit denen eine Klebeverbindung zwischen Behältern möglich ist, insbesondere Verbindungen, Materialien oder Massen, die im flüssigen oder zähflüssigen Zustand aufgebracht einen selbstklebenden Auftrag bilden und/oder unter Anwendung von Druck und/oder durch Energieeintrag und/oder nach einem Aushärten oder Vernetzen (auch durch Energieeintrag) eine Klebeverbindung bewirken. "Haft- oder Klebemittel" in Sinne der Erfindung sind u.a. auch Mehrschichtmaterialien, z.B. solche aus wenigstens einem Trägermaterial, welches mit einem Material beschichtet ist, mit dem eine Klebeverbindung zwischen Behältern möglich ist, also mindestens zweiseitig haftend- und/oder klebend aktiv sind. Solche Haft- oder Klebemittel können als Pads bezeichnet werden. Ein "klebender" Behälter weist im Sinne der Erfindung Haft- oder Klebemittel auf, bzw. ist mit einem Haft- und Klebemittelauftrag versehen. Das Haft- oder Klebemittel ist bevorzugt derart gewählt, dass die Behälter händisch und zerstörungsfrei aus dem Gebinde lösbar bzw. voneinander trennbar sind. Denkbar ist, dass flüssiges Klebemittel von den Auftragselementen aufgetragen wird. Möglich ist, wenn ein niedrigviskoser UV-aushärtender Klebstoff aufgetragen wird. Geeignet wäre auch ein Heißleim, welcher jedoch sehr schnell abkühlt, und so eventuell seine Klebeigenschaften aufgeben könnte, bevor die Behälter des Gebindes hinreichend miteinander verklebt sind. Ein UV-aushärtender Klebstoff ist auch vorteilhaft hinsichtlich der besonders leichten Einstellung seiner gewünschten Eigenschaften. Eine entsprechende Aushärtstation oder eine Aushärtstrecke ist in sinnvoller Weise stromab der Auftragselemente stationär oder entlang des Lineartransporteurs oberhalb oder gegebenenfalls auch unterhalb vorgesehen. Eine Aushärtstation kann zum Beispiel ein Tunnel mit UV-Ausleuchtung sein.

Zielführend ist, wenn der Lineartransporteur in seinem ersten Abschnitt mehrere Transportflächen aufweist, welche die Behälter von der Eingangsseite in Richtung zur Austragsseite und in Richtung zum zweiten Abschnitt des Lineartransporteurs begleiten. Zweckmäßig ist dabei, wenn die Anzahl der Transportflächen der Anzahl der einspurigen Behälterströme entspricht. Beispielhaft können zwei Transportflächen vorgesehen sein. In dem ersten Abschnitt sind die beispielhaften zwei Transportflächen einander parallel, aber quer zur Transportrichtung gesehen beabstandet. An den ersten Abschnitt schließt sich der zweite Abschnitt an, welcher in den dritten Abschnitt übergeht. In dem zweiten Abschnitt werden die bevorzugt zwei Transportflächen schräg aufeinander zu geführt, so dass in Aufsicht gesehen quasi ein sich kegelförmig verjüngender Lineartransporteur in seinem zweiten Abschnitt gebildet ist. In dem dritten Abschnitt schließlich sind die beispielhaft genannten zwei Transportflächen wieder parallel zu einander weisen aber quer zur Transportrichtung keinen, oder wenn, nur einen geringen Abstand zueinander auf, worauf noch eingegangen wird.

Zielführend ist, dass die Kopfführungen querverschiebbar aber auch rotierbar sind. So kann eine Linearbewegung mit einer Rotation überlagert werden.

Die Kopfführungen können an ihrer Halteseite quasi entsprechend einer Tulpe, wie diese z.B. aus Etikettiermaschinen bekannt sind, ausgeführt sein. Gegenüberliegend zur Halteseite, also an ihrer Führungsseite weisen die Kopfführungen einen Steuerfortsatz, der in eine Kulissenführung eingreift, auf. Die Kopfführungen weisen noch ein Bewegungselement auf, welches an Quertraversen verschiebbar gelagert ist.

Das Bewegungselement kann auch als Platte bezeichnet werden, welche an ihren Enden in Transportrichtung gesehen jeweils Ausnehmungen oder Bohrungen aufweist, welche von den Quertraversen durchgriffen werden. Die Quertraversen sind in Transportrichtung gesehen beabstandet und endseitig jeweils an einem Antriebselement gehalten. Das Antriebselement kann eine Kette oder auch ein Zahnriemen sein, und ist bevorzugt umlaufend.

Das Bewegungselement wird von einem Verbindungselement durchgriffen, welches die Führungsseite mit der Halteseite verbindet. Das Verbindungselement weist in bevorzugter Ausgestaltung eine unverdrehbar gelagerte Hülse auf, in welcher eine Welle angeordnet ist. Trotz der drehsicheren Lagerung der Hülse, ist diese günstiger Weise in Hochrichtung gesehen beweglich gelagert, worauf noch eingegangen wird. Die Hülse kann in bevorzugter Ausgestaltung führungsseitig einen größeren Durchmesser als halteseitig aufweisen.

In günstiger Ausgestaltung kann vorgesehen sein, jeweils zwei Kopfführungen an gemeinsamen Quertraversen anzuordnen. Jeder Kopfführung ist oberhalb der Transportfläche eine Kulissenführung angeordnet, welche von dem Steuerfortsatz durchgriffen wird. Die Kulissenführung ist dabei zielführend mit ihrer Mittelachse kongruent, also deckungsgleich zur Mittelachse der jeweils zugeordneten Transportfläche. Dies bedeutet gleichzeitig, dass die Kulissenführung entsprechend dem Verlauf des Lineartransporteurs in seinen drei Abschnitten identisch ausgeführt ist. Unter anderem ist bevorzugt vorgesehen, die beiden Kulissenführungen in dem ersten Abschnitt quer zur Transportrichtung gesehen beabstandet zueinander anzuordnen. In dem zweiten Abschnitt laufen die beiden Kulissenführungen schräg aufeinander zu, um in dem dritten Abschnitt aneinander geführt parallel weitergeführt zu werden. Durchläuft der Steuerfortsatz nun den zweiten Abschnitt, wird ein Querverschieben der jeweiligen, zunächst beabstandeten Kopfführungen auf einander zu bei gleichzeitiger Rotation der Tulpe bewirkt. Dabei ist der Steuerfortsatz in rotativem Eingriff mit der Welle. In dem ersten und dritten Abschnitt können Maßnahmen getroffen werden, welche eine Rotation vermeiden. Solche Maßnahmen können im Zusammenspiel der Kulissenführung mit dem Steuerfortsatz vorgesehen werden. So kann eine definierte Rotation der an der jeweiligen Kopfführung gehaltenen Behälter bewirkt werden. Die Mittelachsen der Kulissenführungen sind nicht zwingend kongruent zur Mittelachse der Transportflächen anzuordnen. Denkbar ist eine versetzte Anordnung, wobei der Steuerfortsatz dann entsprechend ausgeführt ist, um ein Querverschieben und eine Rotation bewirken zu können.

Die Auftragselemente sind in dem zweiten Abschnitt angeordnet, und tragen das Haft- oder Klebemittel auf die Behälter bzw. auf die Kontakt- und Berührflächen auf. In günstiger Ausgestaltung sind in Transportrichtung gesehen aufeinander folgend mehrere Auftragselemente vorgesehen, was dem Umstand der Rotation des an der jeweiligen Tulpe gehaltenen Behälters Rechnung trägt. Durch die Rotation der Behälter entlang der im zweiten Abschnitt schrägen Transportrichtung können so in Umfangsrichtung der Behälter gesehen versetzte Kontakt- und Berührflächen mit Haft- oder Klebemittel versehen werden, was einen Klebeverbund begünstigt, da so quasi jeder Behälter zum direkt benachbarten Behälter an zumindest zwei Kontakt- und Berührflächen einen Klebeverbund eingehen kann.

In dem dritten Abschnitt sind die Kopfführungen und die daran gehaltenen Behälter einander angenähert, wobei das Gebinde bevorzugt aus sechs Behältern gebildet ist. Dabei kann von den Kopfführungen eine Kraft quer zur Transportrichtung ausgeübt werden, so dass die betreffenden Behälter eines Gebindes unter Krafteinwirkung gegeneinander gedrückt bzw. gepresst werden, was den Klebverbund positiv beeinflusst. Dazu könnten die Kulissenführungen weiter angenähert werden, um die wirkende Druckkraft zu erhöhen.

Wie bereits angeführt, ist die Hülse höhenbeweglich, aber nicht drehbar gelagert. Die Rotation des Steuerfortsatzes wird über die innen liegende Welle auf die Tulpe übertragen. Um die Tulpe der Kopfführung auf die Behälter eingangsseitig des ersten Abschnittes auf die Behälter abzusetzen und ausgangseitig des dritten Abschnittes abzuheben, ist in zweckmäßiger Ausgestaltung eine Höhensteuerung vorgesehen. Die Höhensteuerung weist in bevorzugter Ausgestaltung eine parallel zur Kulissenführung angeordnete Schiene oder Übergangselemente auf, welche eingangsseitig des ersten Abschnittes einen sich keilförmig verjüngenden Absetzübergang und ausgangsseitig des dritten Abschnittes einen sich gegenläufig keilförmig erweiternden Anhebübergang aufweist. Mit der Schiene und mit den Übergängen steht ein Höhensteuerelement in Wirkverbindung, welches an seinem freien Ende z.B. eine Rolle zum Abrollen auf der Schiene und auf den Übergängen hat, und welches mit einem Verbindungssteg gegenüberliegend zum freien Ende fest mit der Hülse verbunden ist. So kann durch Abrollen bzw. führen entlang der Schiene und/oder der Übergänge deren Höhenveränderung entlang der Transportrichtung entsprechend auf die Kopfführungen, bzw. auf die Hülsen und somit auf die Tulpen zum absetzen und abheben übertragen werden. Zur Begrenzung der Absetzbewegung kann die Schiene in den drei Abschnitten zwischen den Übergängen weitergeführt sein. Die Schiene ist nicht zwingend entlang des ersten bis zum dritten Abschnitt zwischen den Übergängen erforderlich. Ausreichend kann sein, wenn eingangs des ersten Abschnittes der keilförmige Absetzübergang vorgesehen ist und erst ausgangsseitig des dritten Abschnittes der keilförmige Anhebübergang vorgesehen sind, wobei zwischen beiden Übergängen auf eine Höhensteuerung, also auf die Weiterführung der Schiene zwischen beiden Übergängen verzichtet werden kann. Möglich ist, anstelle der Schiene eine Sperre vorzusehen, welche eine Höhenbewegung in Absetzrichtung begrenzt. Eine solche Sperre kann in der Ausgestaltung der Hülse gesehen werden, welche führungsseitig den größeren Durchmesser als halteseitig aufweist, so dass sich die Hülse mit dem bezogen auf den halteseitigen Durchmesserbetrag überstehenden Ringflansch auf das Bewegungselement, also auf die querverschiebbare Platte auflegt, wenn der Absatzübergang passiert ist, und sich wieder von der Platte abhebt, wenn der Abhebübergang passiert wird.

Die Anzahl der Kopfführungen entspricht der Anzahl an einspurigen Behälterströmen, so dass beispielhaft zwei nebeneinander angeordnete Kopfführungen an gemeinsamen Quertraversen vorgesehen werden können. Natürlich sind mehrere Quertraversen vorgesehen. Die Kopfführungen übergreifen den Behälterkopf mit den Tulpen von oben, so dass ein lagesicherer Transport der Behälter in Transportrichtung möglich ist. Die Kopfführungen ermöglichen die lagesichere Zusammenführung der Behälterströme zu dem Gebinde, auch entlang der in Richtung zur Mittelachse quasi schräg verlaufenden Transportflächen oder Kulissehführungen. Die Kopfführungen haben aber noch die Funktion eine hinreichende Kraft auf die zusammengeführten Behälter auszuüben, was einem Haft- oder Klebverbund sehr zuträglich ist. Zweckmäßig ist im Sinne der Erfindung, wenn die Kopfführungen relativ zu den Quertraversen verschiebbar sind, wobei die Kopfführungen mit daran geführten Behältern aufeinander zugeführt werden, und wobei die Behälter eines Gebindes entlang ihres Transportweges im dritten Abschnitt unter Krafteinwirkung gegeneinander gepresst werden. Anstelle der Kulissenführung und der Höhensteuerung könnte auch ein elektromotorischer, ansteuerbarer Antrieb vorgesehen werden. Denkbar ist auch bereits im zweiten Abschnitt des Lineartransporteurs Behälter einer gemeinsamen Transportfläche zusammenzuführen und aneinander zu binden, wobei die dann aneinander gebundenen Teilgebinde anschließend im dritten Abschnitt zu dem Gesamtgebinde zusammengeführt werden.

Vorteilhaft können an dem Lineartransporteur Mitnehmerelemente vorgesehen sein, welche umlaufend ausführbar sind, und welche in Zusammenwirken mit den Kopfführungen, den Transport entlang der jeweiligen Transportfläche unterstützen können.

An den Transportflächen, beispielsweise an den Transportflächen des dritten Abschnittes können seitlich Führungselemente angeordnet sein. Die Führungselemente sind quer zur Transportrichtung so beabstandet, dass das Gesamtgebinde bzw. die darin enthaltenden Behälter zusätzlich zu der bereits aufgebrachten Kraft mittels der Kopfführungen aneinander gedrückt und gepresst werden, wobei die Krafteinwirkung wiederum zweckdienlich zur Herstellung des Klebe- oder Haftverbundes ist. Die Führungselemente können auch als Geländer bezeichnet werden, welche die Gebinde und die Behälter des Gebindes zwischen sich führenund stützen. Denkbar ist, die Führungselemente starr auszuführen. Möglich ist aber auch, die Führungselemente mitlaufend zu den Transportflächen auszuführen, so dass die Behälter bzw. die Gebinde keine Relativgeschwindigkeit zu den seitlich angeordneten Führungselementen aufweisen. Mit anderen Worten könnten die Führungselemente nicht nur die Funktion des Führens und Stützens sondern auch noch die Funktion eine auf die Behälter wirkende Kraft zu erzeugen aufweisen, welche die Behälter des Gebindes quer zur Transportrichtung gesehen verdichtet, und einander annähert, gegeneinander drückt oder anpresst, um so eine hinreichende Klebverbindung bewirken und/oder unterstützen zu können.

Wird UV-aushärtender Klebstoff aufgetragen, kann eine Aushärtestation oder -strecke im dritten Abschnitt nach dem Zusammenführen der Behälter zu dem Gebinde vorgesehen sein. Die Aushärtestation kann ober- oder unterhalb der Transportflächen angeordnet sein, wobei auch ein Tunnel mit UV-Ausleuchtung denkbar ist. Um den Transport der Gesamtgebinde in Richtung zur Austragsseite zu unterstützen, könnten auch an dem dritten Abschnitt Mitnehmerelemente vorgesehen werden. Werden Pads aufgebracht, können entsprechende Vorrichtungen zum Ableiten der entstehenden Restträgermaterialien vorgesehen werden.

Das Gebinde kann in Transportrichtung gesehen mehrreihig, also beispielhaft zweireihig oder z.B. dreireihig ausgeführt sein. Möglich ist die Auftragelemente nicht nur starr an dem Lineartransporteur anzuordnen, sondern ebenfalls beweglich, so dass die Auftragelemente zumindest eine Teilstrecke entlang mit dem jeweiligen Behälterstrom mitgeführt werden könnten.

Möglich ist, das Gebinde, also das Gesamtgebinde noch mit einem Trageelement, beispielsweise mit einem Griff zu versehen, wozu geeignete Vorrichtungen vorgesehen werden können, welche stromab der Ausgangsseite oder an geeigneter Stelle an dem Lineartransporteur angeordnet ist. Natürlich kann das Tragelement mit dem zuvor genannten Haft- oder Klebemittel an dem Gebinde befestigt werden.

Mit der Erfindung wird so eine Vorrichtung zur Herstellung eines Gebindes zur Verfügung gestellt, welche trotz des Verzichts auf eine umgreifende Folie und/oder trotz des Verzichts auf eine Umreifung in einfacher Weise vermeidet, dass die Behälter bei dem Transport in eine nestende Position gelangen, wobei auch nach der Entnahme eines oder mehrerer Behälter aus einem Gebinde der Zusammenhalt der verbliebenen Behälter im Gebinde erhalten bleibt oder wieder hergestellt werden kann. Durch den Verzicht auf eine Folie oder ein Umreifungsband (folienloser Flaschenpack), wird die Umwelt durch Vermeidung von Abfall entlastet, wobei so auch Ressourcen zur Herstellung der meist aus Kunststoff hergestellten Folien oder Unreifungen geschont werden. Die Behälter eines Gebindes werden während des Transportes, also im kontinuierlichen Betrieb der Vorrichtung zur Herstellung von Gebinden direkt aneinander geklebt. Zudem ist ein folienloser Flaschenpack bei minimalem Klebemittelauftrag erreichbar, welcher eine hinreichende Bindung der einzelnen Behälter zueinander aufweist.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: einen Teilabschnitt einer Vorrichtung zum Herstellen eines Gebindes mit sechs Artikeln bzw. Behältern in einer Aufsicht,
- Fig. 2: den Teilabschnitt aus Figur 1 in einer Seitenansicht,
- Fig. 3: eine Kopfführung in einer perspektivischen Ansicht als Einzelheit,
- Fig. 4: die Kopfführung aus Figur 3 in einer Aufsicht,
- Fig. 5: die Kopfführung aus Figur 3 in einer Schnittansicht, und
- Fig. 6: die Kopfführung aus Figur 3 in Transportrichtung gesehen.
- Fig. 7: eine schematische Seitenansicht der Vorrichtung aus Figur 1, bei der die Kopfführungen der Behälter mittels elektrischmagnetischer Direktantriebe verfahrbar sind.
- Fig. 8: eine schematische Draufsicht auf die Vorrichtung aus Figur 7, mit einem mittig zwischen den Behältern angeordneten elektrisch-magnetischen Direktantrieb für die Behälterführung.
- Fig. 9: eine schematische Vorderansicht auf die Vorrichtung aus Figur 7, mit einem mittig zwischen den Behältern angeordneten, höhenverstellbaren elektrisch-magnetischen Direktantrieb für die Behälterführung.

In den unterschiedlichen Figuren sind gleiche Teile stets mit denselben Bezugszeichen versehen, weswegen diese in der Regel auch nur einmal beschrieben werden.

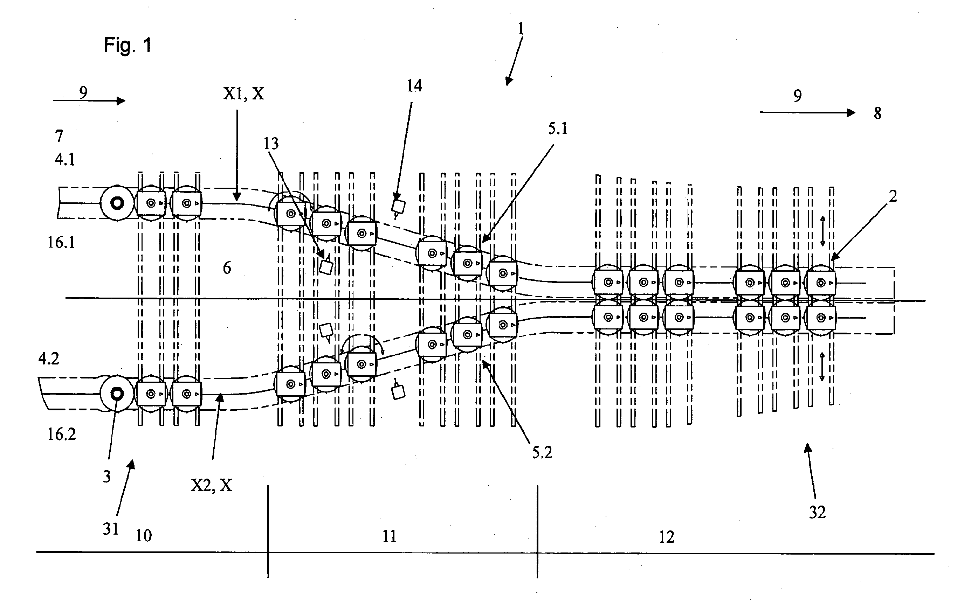

Figur 1 zeigt einen Teilabschnitt einer Vorrichtung 1 zur Herstellung von Gebinden 2 aus Behältern 3, d.h. einer Verpackungsmaschine 1, wobei im Vorfeld aus einem breitem Behälterstrom Behälter 3 in mehrere, wie dargestellt beispielhaft in zwei einspurige Behälterströme 4.1 und 4.2 umgewandelt werden, in welchem die Behälter 3 beispielsweise bezüglich ihrer Behälter - und/oder Ausstattungsmerkmale eine willkürliche Orientierung aufweisen, durch Abtrennen und Zusammenführen einer vorbestimmten Anzahl an Behältern 3, also beispielsweise jeweils drei Behälter 3, verdichtete oder formierte Behältergruppen 5.1 und 5.2 oder Teilgebinde 5.1 und 5.2 gebildet und nachfolgend jeweils zu dem Gebinde 2 zusammengefasst werden, wobei zumindest einer der Behälter 3 des Gebindes 2, bevorzugt jeder Behälter 3 ein Haft- oder Klebemittel und/oder einen Haft- oder Klebemittelauftrag zumindest an einer Kontakt- oder Berührfläche aufweist. Die Kontakt- und Berührflächen sind in den Figuren eindeutig durch Anlage der Behälter 3 aneinander erkennbar, aber nicht mit einem Bezugszeichen versehen. Die Behälter 3 der jeweiligen Teilgebinde 5.1 und 5.2 sind, wie in Figur 1 erkennbar, noch zueinander beabstandet.

Figur 1 zeigt, dass ein Lineartransporteur 6 vorgesehen ist, welcher die Behälter 3 von einer Eingangsseite 7 in Richtung zu einer Ausgangsseite 8 transportiert. Die Transportrichtung von der Eingangsseite 7 zur Austragsseite 8 ist mittels des Pfeils 9 dargestellt. Die Vorrichtung 1 oder die Verpackungsmaschine 1 weist drei Abschnitte 10, 11 und 12 auf. Der erste Abschnitt 10 beginnt eingangsseitig, geht in den zweiten Abschnitt 11 über, welcher an den dritten Abschnitt 12 anschließt.

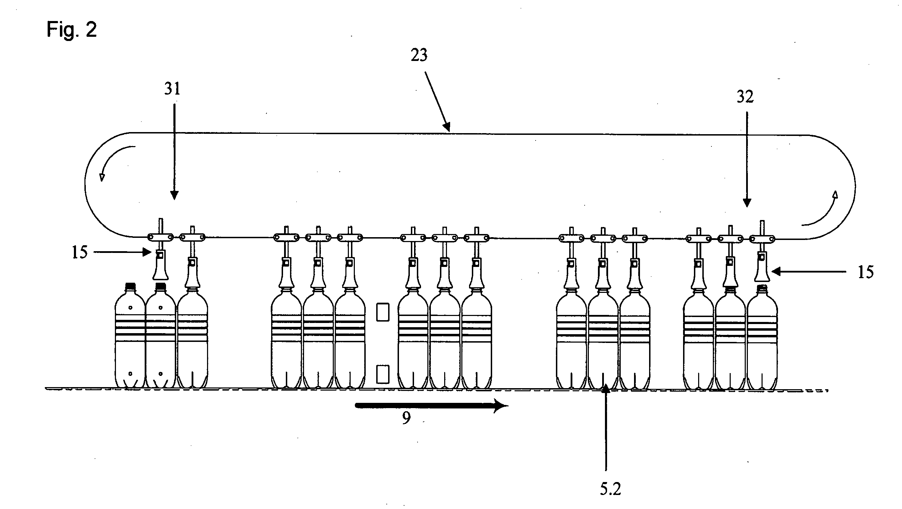

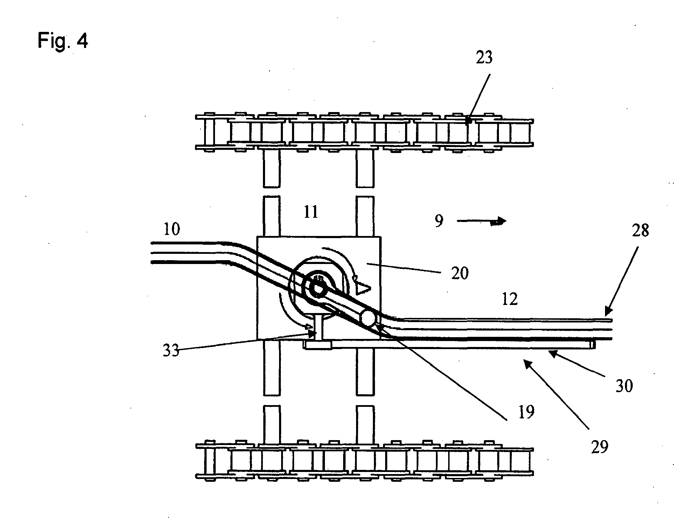

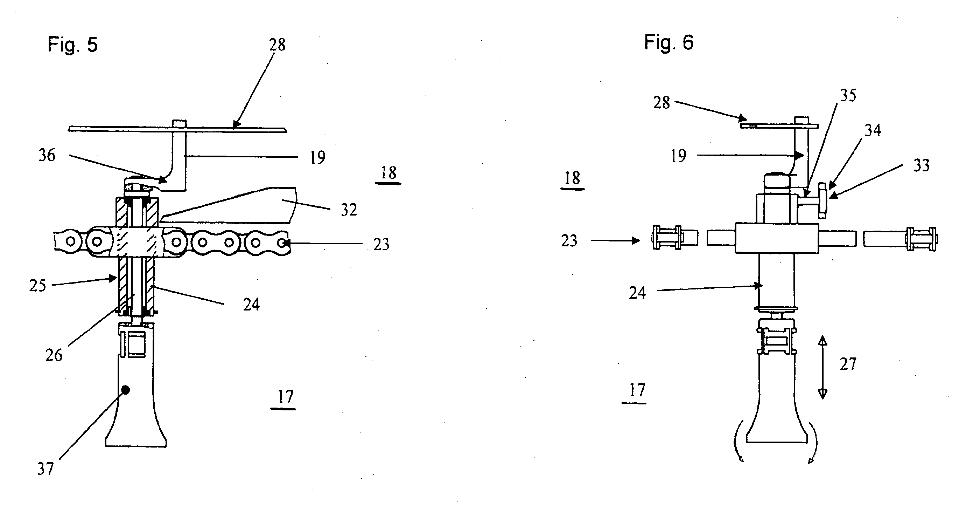

In dem zweiten Abschnitt 11 des Lineartransporteurs 6 sind Auftragselemente 13, 14 zum Auftragen von Haft- oder Klebemittel vorgesehen, wobei querverschiebbare und rotierbare Kopfführungen 15 (Figuren 2 bis 6) in dem ersten Abschnitt 10 des Lineartransporteurs vorgesehen sind Die Teilgebinde 5.1 und 5.2 werden in einem dritten Abschnitt zu dem Gesamtgebinde 2 zusammengeführt und in Richtung zur Austragsseite 8 transportiert.

Zielführend ist, wenn der Lineartransporteur 6 in seinem ersten Abschnitt mehrere Transportflächen 16.1 und 16.2 aufweist, welche die Behälter 3 jeweils einspurig (4.1 und 4.2) von der Eingangsseite 7 in Richtung zur Austragsseite 8 oder in Richtung zum zweiten Abschnitt 11 des Lineartransporteurs 6 fördern. Beispielhaft sind zwei Transportflächen 16.1 und 16.2 vorgesehen.

In dem ersten Abschnitt 10 sind die beispielhaften zwei Transportflächen 16.1 und 16.2 einander parallel. In dem zweiten Abschnitt 11 werden die einspurigen Behälterströme 4.1 und 4.2, also die Transportflächen 16.1 und 16.2 zusammengeführt. In dem dritten Abschnitt 12 sind die Behälterströme 4.1 und 4.2, also die Transportflächen 16.1 und 16.2 wieder parallel zueinander.

Die Kopfführungen 15 sind an ihrer Halteseite 17 beispielhaft entsprechend einer Tulpe ausgeführt. Gegenüberliegend zur Halteseite 17, also an ihrer Führungsseite 18 weisen die Kopfführungen 15 einen Steuerfortsatz 19 auf. Die Kopfführungen 15 weisen noch ein Bewegungselement 20 auf, welches an Quertraversen 21 verschiebbar gelagert ist.

Das Bewegungselement 20 kann auch als Platte bezeichnet werden, welche an ihren Enden in Transportrichtung 9 gesehen jeweils Ausnehmungen 22 oder Bohrungen aufweist, welche von den Quertraversen 21 durchgriffen werden. Die Quertraversen 21 sind in Transportrichtung 9 gesehen beabstandet und endseitig jeweils an einem Antriebselement 23 gehalten. Das Antriebselement 23 kann eine motorisch angetriebene Kette sein, und ist bevorzugt umlaufend (Figur 2). So sind auch die Kopfführungen 15 umlaufend, wie der Figur 2 prinzipiell entnehmbar ist.

Vorzugsweise ist das gesamte Antriebselement 23 höhenverstellbar, insbesondere motorisch vertikal verfahrbar, um im Falle von Formatwechsel auf eine geänderte Behältergröße, in vertikaler Richtung den Abstand zwischen Lineartransport 6 und Antriebselement 23 anzupassen.

Das Bewegungselement 20 wird von einem Verbindungselement 24 durchgriffen, welches die Führungsseite 18 mit der Halteseite 17 verbindet. Das Verbindungselement 24 weist in bevorzugter Ausgestaltung eine unverdrehbar gelagerte Hülse 25 auf, in welcher eine Welle 26 angeordnet ist. Trotz der drehsicheren Lagerung der Hülse 25, ist diese günstiger Weise in Hochrichtung (Doppelpfeil 27) gesehen beweglich gelagert, worauf noch eingegangen wird. Die Hülse 25 weist führungsseitig einen größeren Durchmesser auf als halteseitig.

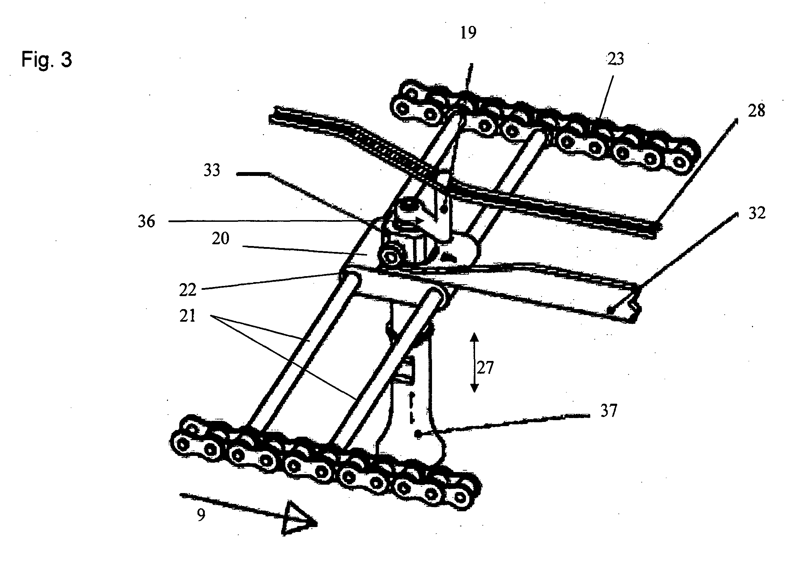

In günstiger Ausgestaltung kann vorgesehen sein, jeweils zwei Kopfführungen 15 an gemeinsamen Quertraversen 21 anzuordnen. Beispielhaft ist dargestellt, dass lediglich eine Kopfführung 15 an einer Quertraverse 21 angeordnet ist. Bei dieser beispielhaften Ausgestaltung ist jedem Behälterstrom 4.1 und 4.2, also jeder Transportflächen 16.1 und 16.2 eine Kopfführungsspur zugeordnet. Oberhalb der Transportfläche 16.1 und 16.2 ist jeder Kopfführungsspur 15 jeweils eine Kulissenführung 28 zugeordnet, welche von dem Steuerfortsatz 19 durchgriffen wird. Die jeweilige Kulissenführung 28 ist dabei zielführend mit ihrer Mittelachse X bevorzugt kongruent zur Mittelachse X1 oder X2 der jeweils zugeordneten Transportfläche 16.1 und 16.2, wobei auch eine versetzte Anordnung der Kulissenführen 28 zur jeweiligen Transportfläche 16.1 und 16.2 möglich ist, wenn der Steuerfortsatz 19 entsprechend ausgeführt ist, wie in den Figuren 3 bis 6 angedeutet ist, in welchen ein Versatzausgleichselement 36 vorgesehen ist. Das Versatzausgleichselement 36 kann stets, auch bei einer kongruenten Führung der Mittelachsen vorgesehen sein. Dies bedeutet im Wesentlichen, dass die Kulissenführung 28 entsprechend dem Verlauf des Lineartransporteurs 6 in seinen drei Abschnitten 10 bis 12 identisch ausgeführt ist. Mit anderen Worten ist bevorzugt vorgesehen, die beiden Kulissenführungen 28 in dem ersten Abschnitt 10 quer zur Transportrichtung 9 gesehen beabstandet zueinander anzuordnen. In dem zweiten Abschnitt 11 laufen die beiden Kulissenführungen 28 schräg aufeinander zu, um in dem dritten Abschnitt 12 aneinander geführt parallel weitergeführt zu werden. Durchläuft der Steuerfortsatz 19 nun den zweiten Abschnitt 11, wird ein Querverschieben der jeweiligen, zunächst beabstandeten Kopfführungen 15 auf einander zu bei gleichzeitiger Rotation der Tulpe bewirkt. Dabei ist der Steuerfortsatz 19 in Eingriff mit der Welle 26. In dem ersten und dritten Abschnitt 10 und 12 können Maßnahmen getroffen werden, welche eine Rotation der Welle 26 vermeiden. So kann eine definierte Rotation der an der jeweiligen Kopfführung 15 gehaltenen Behälter 3 bewirkt werden.

Die Auftragselemente 13 und 14 sind in dem zweiten Abschnitt 11 jeweils an einer der Transportflächen 16.1 und 16.2 angeordnet, und tragen das Haft- oder Klebemittel auf die Kontakt- und Berührflächen der Behälter 3 auf. Die Auftragselemente 13 und 14 sind in Transportrichtung 9 gesehen aufeinander folgend vorgesehen, was dem Umstand der Rotation des an der jeweiligen Tulpe gehaltenen Behälters 3 Rechnung trägt, wobei das Auftragselement 13 beispielhaft quasi innenseitig und das Auftragselement 14 quasi außenseitig angeordnet ist. Durch die Rotation der Behälter 3 um Ihre Hochachse bei gleichzeitigem Transport entlang der schrägen Transportrichtung 9 können so in Umfangsrichtung der Behälter 3 gesehen versetzte Kontakt- und Berührflächen mit Haft- oder Klebemittel versehen werden, was einen Klebeverbund begünstigt, da so quasi jeder Behälter 3 zum direkt benachbarten Behälter 3 des Gebindes an zumindest zwei Kontakt- und Berührflächen einen Klebeverbund eingehen kann.

In Figur 1 ist ein Abstand zwischen jeweils in Transportrichtung 9 folgenden Behältern 3 erkennbar, so dass das Gebinde aus zwei Behältern 3 gebildet sein kann. Bevorzugt ist aber auch, die Kopfführungen 15 und die daran gehaltenen Behälter 3 in dem dritten Abschnitt 12 so einander anzunähern, dass das Gebinde 2 bevorzugt aus sechs Behältern 3 gebildet ist. Der in den Figuren 1 und 2 erkennbare Abstand zwischen aufeinander folgenden Behältern 3 eines Gebindes 2 wäre dann natürlich geschlossen, wobei die Kontakt- und Berührflächen mit einander verbunden sind. Dabei kann von den Kopfführungen 15 nicht nur eine Kraft in oder entgegen der Transportrichtung 9, sondern auch eine Kraft quer zur Transportrichtung 9 ausgeübt werden, so dass die betreffenden Behälter 3 eines Gebindes 2 unter Krafteinwirkung gegeneinander gedrückt bzw. gepresst werden, was den Klebverbund positiv beeinflusst. Dazu könnten die Kulissenführungen 28 weiter angenähert werden, um die Behälter 3 weiter quer zur Transportrichtung 9 zu verschieben, so dass die quer zur Transportrichtung 9 wirkende Druckkraft erhöht werden kann.

Wie bereits angeführt, ist die Hülse 25 höhenbeweglich, aber nicht drehbar gelagert. Die Rotation des Steuerfortsatzes 19 wird über die innen liegende Welle 26 auf die Tulpe übertragen. Um die die Tulpe auf die Behälter 3 eingangsseitig des ersten Abschnittes 10 auf die Behälter 3 abzusetzen und ausgangseitig des dritten Abschnittes 12 abzuheben, ist in zweckmäßiger Ausgestaltung eine Höhensteuerung 29 vorgesehen. Die Höhensteuerung 29 weist in bevorzugter Ausgestaltung eine parallel zur Kulissenführung 28 angeordnete Schiene 30 auf, welche eingangsseitig des ersten Abschnittes 10 einen sich keilförmig verjüngenden Absetzübergang 31 und ausgangsseitig des dritten Abschnittes 12 einen sich gegenläufig keilförmig erweiternden Anhebübergang 32 aufweist. Mit der Schiene 30 steht ein Höhensteuerelement 33 in Wirkverbindung, welches an seinem freien Ende 34 z.B. eine Rolle zum Abrollen auf der Schiene 30 hat, und welches mit einem Verbindungssteg 35 gegenüberliegend zum freien Ende 34 fest, also drehsicher mit der Hülse 25 verbunden ist. So kann durch Abrollen oder führen entlang der Schiene 30 deren Höhenveränderung entlang der Transportrichtung 9 entsprechend auf die Kopfführungen 15, bzw. auf die Hülsen 25 und somit auf die Tulpen zum Absetzen und Abheben übertragen werden. Beispielhaft dargestellt ist, dass, eingangs des ersten Abschnittes 10 der keilförmige Absetzübergang 31 vorgesehen ist und erst ausgangsseitig des dritten Abschnittes 12 der keilförmige Anhebübergang 32 vorgesehen sind, wobei zwischen beiden Übergängen 31 und 32 auf eine Höhensteuerung, also auf die Weiterführung der Schiene zwischen beiden Übergängen 31 und 32 verzichtet wurde. Zur Begrenzung der Höhenbewegung kann bei Verzicht auf die Schiene 30 zwischen den Übergängen 31 und 32 die vorteilhafte Ausgestaltung der Hülse 25 mit ihrem führungsseitig größeren Durchmesser genutzt werden, welche sich quasi als Sperre führungsseitig auf das Bewegungselement 20, also auf die Platte auflegt, und so die Höhenbewegung nach unten, also in Schwerkraftrichtung begrenzt.

Die Anzahl der Kopfführungen 15 entspricht der Anzahl an einspurigen Behälterströmen 4.1 und 4.2, so dass beispielhaft zwei nebeneinander angeordnete Kopfführungen 15 an gemeinsamen Quertraversen 21 vorgesehen werden können. Natürlich sind mehrere Quertraversen 21 vorgesehen. Die Kopfführungen 15 übergreifen den Behälterkopf von oben, so dass ein lagesicherer Transport der Behälter 3 in Transportrichtung 9 möglich ist. Die Kopfführungen 15 ermöglichen die lagesichere Zusammenführung der Behälterströme zu dem Gebinde 2, auch entlang der in Richtung zur Mittelachse quasi schräg verlaufenden Transportflächen 16.1 und 16.2 oder Kulissenführungen 28 im zweiten Abschnitt 11.

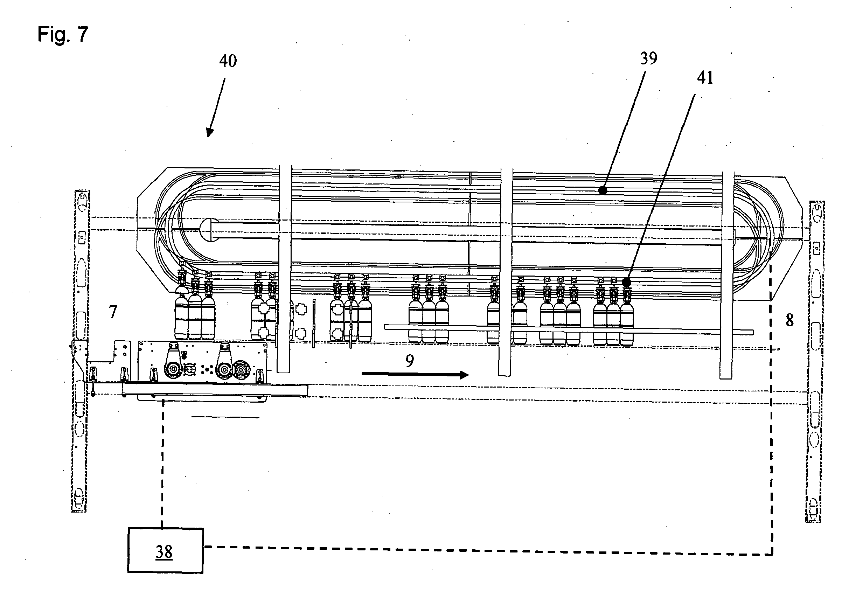

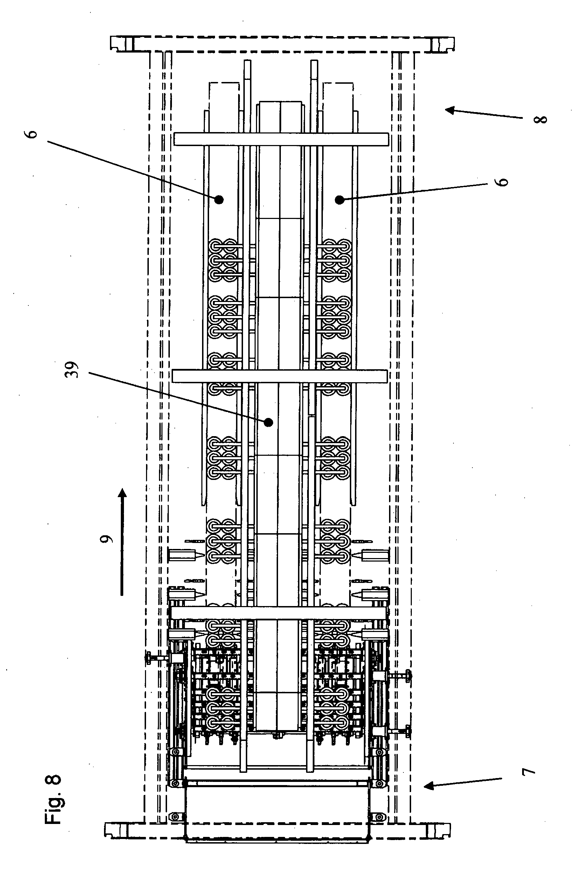

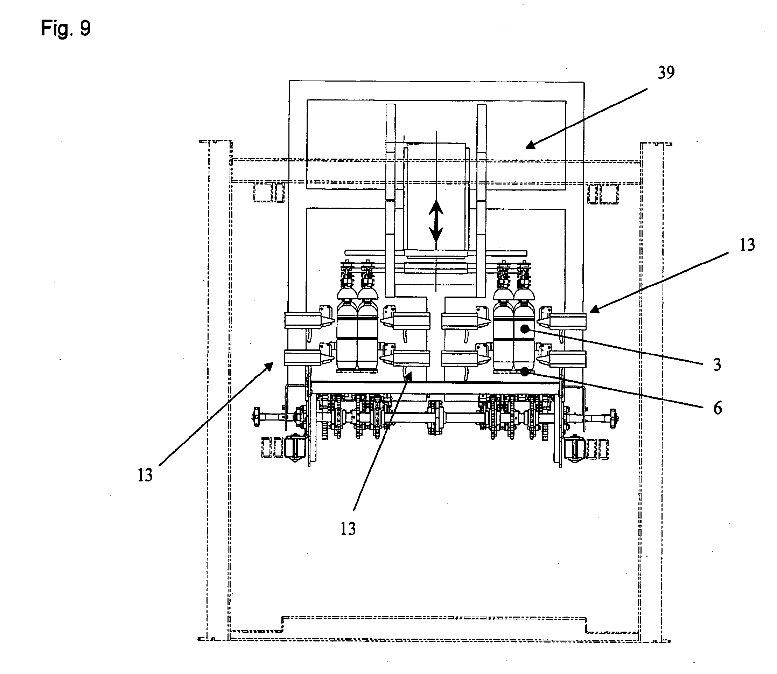

Die Figuren 7 bis 9 zeigen eine Variante einer Kopfführung, welche als elektro-magnetischer Direktantrieb (39) ausgebildet ist. In der Figur 7 werden an der mit 7 bezeichneten Eingangsseite der Vorrichtung 1 in analoger Weise gefüllte und verschlossene Behälter 3 von einem nicht dargestellten äußeren Transporteur an eine sich an den Behältereinlauf vorbei bewegenden Kopfführung 15 übergeben, und zwar bei zunächst angehobener oder sich absenkender Zentrierglocke 37. Im Anschluss daran wird gesteuert durch die Steuereinheit 38 und angetrieben durch die Höhensteuerung 29 die Zentrierglocke 37 abgesenkt, sodass der jeweilige Behälter 3 im Bereich seiner Behältermündung und im Bereich des dortigen Behälterverschlusses von der Zentrierglocke 37 aufgenommen und so zwischen dieser und dem Lineartransporteur 6 gehalten wird.

Der Lineartransporteur 6 und das Antriebselement 23 oder auch deren elektro-magnetischer Direktantrieb 39 werden so gesteuert, dass immer dann, wenn ein Behälter 3 sich im Eingangsbereich der Vorrichtung 1 befindet, eine Zentrierglocke 37 diesen Behälter 3 aufnimmt, der Lineartransporteur 6 und die Kopfführung 15 den Behälter 3 synchron durch die Abschnitte 10, 11 und 12 fördern und dieser dabei behandelt wird, und nachdem die Höhensteuerung 29 in Abschnitt 12 die Zentrierglocke 37 vom jeweiligen Behälter 3 abgehoben hat, die Kopfführung 15 beschleunigt und die Zentrierglocke 37 in Wartestellung an die Eingangsseite 7 der Vorrichtung 1 verbringt. Auf dem Antriebselement 23 ist eine Vielzahl von individuell bewegbaren Kopfführung 15 in Form von Schlitten 41 angebracht, die wiederum die kurvengesteuerten Bewegungselemente 20 antreiben und somit für die Bewegung, die Drehung und den Druck auf die Behälter 3 auf dem Weg von der Eingangsseite 7 über die Abschnitte 10, 11 und 12 bis hin zur Austragsseite 8 sorgen.

Hierbei erfolgt der elektro-magnetische Antrieb der umlaufenden Kopfführungen 15 oder Gruppen von seitlich benachbarten Kopfführungen 15 individuell, d.h. unabhängig von nachlaufenden oder vorlaufenden Kopfführungen 15. Somit besteht ein besondere Vorteil darin, dass die Rückführung der Kopfführungen 15, nach dem Entlassen der Behälter 3, stark beschleunigt erfolgen kann, und die Kopfführungen 15 oberhalb des Bereichs 7 in einer Langsamfahrt oder Start-Stopp-Systematik in Wartestellung bleiben. Somit sind insgesamt im Vergleich zu einem gleichmäßig bestückten Antrieb, viel weniger Kopfführungen 15 oder Gruppen von Kopfführungen 15 erforderlich.

Eine besonders vorteilhafte, aber nicht gezeigte Ausgestaltung besteht darin, die separate Höhensteuerung 29 entfallen zu lassen. Dies ist möglich, wenn in Transportrichtung eine Beschleunigung der Kopfführungen 15 im Kurvenbereich oder in der Phase der Absenkung steuerungsseitig veranlasst wird, welche synchron zur konstanten (beschleunigungsfreien) Transportgeschwindigkeit des Behälters 3 auf dem Lineartransporteur. Somit erfolgt die Absenkung der Zentrierglocke 37 gem. der Kurvenkontur des Kopfantriebes

In analoger Weise wird beim Anheben der Zentrierglocke 37 die Kopfführung 15 im Bereich 8 durch entsprechende Steuerung verlangsamt, so dass auch hier diese mit dem Behälter 3 zu jedem Zeitpunkt synchron in Transportrichtung der Behälter 3 vorangetrieben wird, solange diese in Kontakt sind oder in Kontakt geraten können, da diese noch nicht vollständig voneinander entfernt wurden.

Die in den Figuren 1 bis 6 gezeigten und vorstehend beschriebenen Detaillösungen zum Drehen der Behälter, zum Auftragen von Klebstoff auf Behälter, zum Zusammenfügen der einzelnen Behälter zu den jeweiligen Behältergruppen respektive Gebinden Höhenverstellung-/anpassung des gesamten Kopfantriebes, können selbstverständlich auch in analoger Form auf die zuletzt beschriebenen und in den Figuren 7 bis 9 gezeigten Ausführungsvarianten in analoger Weise angewendet werden.

### Bezugszeichenliste:

- 1: Vorrichtung zur Herstellung von GebindenNerpackungsmaschine
- 2: Gebinde
- 3: Behälter
- 4: Behälterspur (4.1 und 4.2)
- 5: Teilgebinde (5.1 und 5.2)
- 6: Lineartransporteur
- 7: Eingangsseite
- 8: Austragseite
- 9: Transportrichtung
- 10: Erster Abschnitt von 6
- 11: Zweiter Abschnitt von 6
- 12: Dritter Abschnitt von 6
- 13: Auftragselement
- 14: Auftragselement
- 15: Kopfführungen
- 16: Transportflächen (16.1 und 16.2)
- 17: Halteseite
- 18: Führungsseite
- 19: Steuerfortsatz
- 20: Bewegungselement
- 21: Quertraverse
- 22: Ausnehmungen in 20 für 21
- 23: Antriebselement
- 24: Verbindungselement
- 25: Hülse
- 26: Welle
- 27: Hochrichtung
- 28: Kulissenführung
- 29: Höhensteuerung
- 30: Schiene
- 31: Absetzübergang
- 32: Anhebübergang
- 33: Höhensteuerelement
- 34: Freies Ende von 33
- 35: Verbindungssteg
- 36: Versatzausgleichselement
- 37: Zentrierglocke
- 38: Steuereinheit
- 39: elektro-magnetischer Direktantrieb
- 40: Wartestellung der Kopfführungen
- 41: Einzelantrieb, Schlitten

## Patentansprüche

1. Vorrichtung zur Herstellung von Gebinden (2), wobei aus einem breitem Behälterstrom mittels Gassenteilung Behälter (3) in mehrere einspurige Behälterströme (4.1 und 4.2) umgewandelt werden, und mit mindestens einer Abteil- und/oder Verdichtereinheit zum Abteilen und Verdichten einer vorbestimmten Anzahl an Behältern (3) Teilgebinde (5.1 und 5.2) gebildet und nachfolgend jeweils zu dem späteren Gebinde (2) zusammengefasst werden, wobei Auftragselemente (13,14) vorgesehen sind, so dass zumindest einer der Behälter (3) des Gebindes (2; 5.1, 5.2) ein Haft- oder Klebemittel und/oder einen Haft- oder Klebemitteläuftrag zumindest an einer Kontakt- oder Berührfläche aufweist, **gekennzeichnet durch** einen Lineartransporteur (6), welcher drei Abschnitte (10, 11, 12) aufweist, wobei in dem ersten Abschnitt (10) Transportflächen (16.1, 16.2) einander parallel verlaufen, wobei die Transportflächen (16.1, 16.2) in dem zweiten Abschnitt (11) schräg aufeinander orientiert, und in dem dritten Abschnitt (12) wiederum zueinander parallel geführt sind, wobei in dessen zweitem Abschnitt (11) Auftragselemente (13, 14) vorgesehen sind, wobei querverschiebbare und rotierbare Kopfführungen (15) zum Einzelbehältertransport entlang der drei Abschnitte (10, 11, 12) vorgesehen sind, und wobei die Behälter (3) in dem dritten Abschnitt (12) zu dem Gebinde (2) zusammengeführt und in Richtung zu einer Austragsseite (8) transportiert werden.

2. Vorrichtung nach Anspruch 1, **dadurch gekennzeichnet, dass** die Auftragselemente (13,14) in dem zweiten Abschnittes (10) des Lineartransporteurs (6) in Transportrichtung (9) gesehen zueinander beabstandet angeordnet sind, wobei das Auftragselement (13) innenseitig und das Auftragselement (14) außenseitig der jeweiligen Transportfläche (16.1, 16.2) angeordnet sind.

3. Vorrichtung nach Anspruch 1 oder 2, **dadurch gekennzeichnet, dass** die Kopfführungen (15) an Quertraversen (21) gelagert sind, welche bevorzugt an einem Antriebselement (23) befestigt und umlaufend sind.

4. Vorrichtung nach einem der vorhergehenden Ansprüche, **dadurch gekennzeichnet, dass** die Kopfführungen (15) eine Halteseite (17) und eine dazu gegenüberliegend angeordnete Führungsseite (18) aufweisen, wobei an der Führungsseite (18) eine Steuerfortsatz (19) angeordnet ist, welcher in eine Kulissenführung (28) eingreift.

5. Vorrichtung nach einem der vorhergehenden Ansprüche, **dadurch gekennzeichnet, dass** die Kopfführung (15) ein Bewegungselement (20) aufweist, welches Ausnehmungen (22) aufweist, die von Quertraversen (21) durchgriffen werden, so dass die Kopfführungen (15) entlang der Quertraversen (21) verschiebbar sind, wobei die Quertraversen (21) an Antriebselementen (23) gelagert sind.

6. Vorrichtung nach einem der vorhergehenden Ansprüche, **dadurch gekennzeichnet, dass** die Kopfführung (15) ein Verbindungselement (24) aufweist, welches drehfest aber höhenbeweglich ein Bewegungselement (20) durchgreift, wobei das Verbindungselement (24) eine Hülse (25) aufweist, in welcher eine Welle (26) angeordnet ist.

7. Vorrichtung nach einem der vorhergehenden Ansprüche, **gekennzeichnet durch** eine Kulissenführung (28) für die Kopfführung (15) welche an den verlauf des Lineartransporteurs (6) angepasst ist.

8. Vorrichtung nach einem der vorhergehenden Ansprüche, **dadurch gekennzeichnet, dass** im bestimmungsgemäßen Betrieb die Kopfführungen (15) im dritten Abschnitt (12) mittels der Kulissenführung (28) quer zur Transportrichtung (9) bewegbar sind.

9. Vorrichtung nach einem der vorhergehenden Ansprüche, **gekennzeichnet durch** eine Höhensteuerung (29) welche eingangsseitig des ersten Abschnittes (10) einen keilförmig sich verjüngenden Absetzübergang (31) und ausgangsseitig des dritten Abschnittes (12) einen keilförmig sich erweiternden Abhebübergang (32) aufweist, wobei ein freies Ende (34) eines Höhensteuerelementes (33) zumindest entlang der Übergänge (31,32) geführt ist, wobei das Höhensteuerelement (33) verdrehsicher an der Kopfführung (15) gelagert ist, so dass die Kopfführung (15) mit ihrer Tulpe eingangsseitig des ersten Abschnittes (10) auf den betreffenden Behälter (3) aussetzbar und im dritten Abschnitt (12) von dem betreffenden abhebbar ist.

10. Vorrichtung nach einem der vorhergehenden Ansprüche, **dadurch gekennzeichnet, dass** das Antriebselement (23) als ein elektro-magnetischer Direktantrieb (39) ausgeformt ist.

11. Vorrichtung nach einem der vorhergehenden Ansprüche, **dadurch gekennzeichnet, dass** das Antriebselement (23) eine Vielzahl von individuell bewegbaren Kopfführung (15) und kurvengesteuerte Bewegungselemente (20) aufweist.

## Claims

1. Device for forming packaging units (2), wherein containers (3) are diverted from a wide container flow, by means of division into channels, into a plurality of single-track container flows (4.1 and 4.2), and part packaging units (5.1 and 5.2) are formed with at least one compartmenting and/or compacting unit for compartmenting and compacting a predetermined number of containers (3), and subsequently brought together in each case to form the later packaging unit (2), wherein application elements (13, 14) are provided, such that at least one of the containers (3) of the packaging unit (2; 5.1, 5.2) comprises an adherence or adhesive means and/or an adherence or adhesive application on at least one contact or touch surface, **characterised by** a linear transporter (6), which exhibits three sections (10, 11, 12), wherein, in the first section (10), transport surfaces (16.1, 16.2) run parallel to one another, wherein the transport surfaces (16.1, 16.2) in the second section (11) are oriented obliquely to one another, and in the third section (12) are again guided parallel to one another, wherein, in its second section (11), application elements (13, 14), wherein head guides (15), capable of transverse displacement and rotatable, are provided for the individual container transport along the three sections (10, 11, 12), and wherein the containers (3) are brought together in the third section (12) to form the packaging unit (2) and are transported in the direction towards a discharge side (8).

2. Device according to claim 1, **characterised in that** the application elements (13, 14) in the second section (10) of the linear transporter (6), seen in the transport direction (9), are arranged spaced apart from one another, wherein the application element (13) is arranged on the inner side of the respective transport surface (16.1, 16.2) and the application element (14) is arranged on the outer side.

3. Device according to claim 1or 2, **characterised in that** the head guides (15) are mounted on bearings on transverse elements (21), which are preferably secured to a drive element (23) and are circulating.

4. Device according to any one of the preceding claims, **characterised in that** the head guides (15) comprise a retaining side (17) and a guide side (18) arranged opposite, wherein, arranged on the guide side (18), is a control projection (19), which engages in a link guide (28).

5. Device according to any one of the preceding claims, **characterised in that** the head guide (15) comprises a movement element (20), which comprises apertures (22), through which transverse elements (21) engage, such that the head guides (15) can be displaced along the transverse elements (21), wherein the transverse elements (21) are mounted on drive elements (23).

6. Device according to any one of the preceding claims, **characterised in that** the head guide (15) comprises a connection element (24) which engages in a torsion-resistant but height-movable manner through a movement element (20), wherein the connection element (24) comprises a sleeve (25) in which a shaft (26) is arranged.

7. Device according to any one of the preceding claims, **characterised by** a link guide (28) for the head guide (15), which is adjusted to the course of the linear transporter (6).

8. Device according to any one of the preceding claims, **characterised in that**, when in operation as intended, the head guides (15) can be moved in the third section (12) by means of the link guide (28) transversely to the transport direction (9).

9. Device according to any one of the preceding claims, **characterised by** a height control element (29), which, on the inlet side of the first section (10), comprises a wedge-like tapering lowering transition piece (31), and, on the outlet side of the third section (12), comprises a wedge-like expanding raising transition piece (32), wherein a free end (34) of a height control element (33) is guided at least along the transition pieces (31, 32), wherein the height control element (33) is mounted at the head guide (15) in a torsion-resistant manner, such that the head guide (15) with its tulip-shaped element on the inlet side of the first section (10) can be placed onto the container (3) concerned, and in the third section (12) can be lifted off it.

10. Device according to any one of the preceding claims, **characterised in that** the drive element (23) is formed as an electro-magnetic direct drive (39).

11. Device according to any one of the preceding claims, **characterised in that** the drive element (23) comprises a plurality of individually movable head guides (15) and curve-controlled movement elements (20).

## Revendications

1. Dispositif servant à fabriquer des unités d'emballage (2), sachant que des contenants (3) sont convertis, à partir d'un large flux de contenants, au moyen d'un répartiteur de voies, en de nombreux flux de contenants (4.1 et 4.2) à une voie unique, et sachant que des unités d'emballage partielles (5.1 et 5.2) sont formées à l'aide d'au moins une unité de tri et/ou de compression servant à trier et à compresser un nombre prédéfini de contenants (3) et qu'ils sont par la suite rassemblés respectivement pour former l'unité d'emballage (2) ultérieure, sachant que des éléments applicateurs (13, 14) sont prévus de sorte qu'au moins un des contenants (3) de l'unité d'emballage (2 ; 5.1, 5.2) présente un agent adhésif ou collant et/ou une couche d'agent adhésif ou collant au niveau au moins d'une surface de contact, **caractérisé par** un transporteur linéaire (6), qui présente trois sections (10, 11, 12), sachant que des surfaces de transport (16.1, 16.2) s'étendent de manière parallèle les unes par rapport aux autres dans la première section (10), sachant que les surfaces de transport (16.1 16.2) sont orientées dans la deuxième section (11) de manière oblique les unes par rapport aux autres et sont guidées, dans la troisième section (12), à nouveau de manière parallèle les unes par rapport aux autres, sachant que des éléments applicateurs (13, 14) sont prévus dans la deuxième section (11) du transporteur, sachant que des guidages de tête (15) pouvant être coulissés de manière transversale et pouvant tourner sont prévus aux fins du transport isolé de contenant le long des trois sections (10, 11, 12), et sachant que les contenants (3) sont rassemblés dans la troisième section (12) pour former l'unité d'emballage (2) et qu'ils sont transportés en direction d'un côté d'évacuation (8).

2. Dispositif selon la revendication 1, **caractérisé en ce que** les éléments applicateurs (13, 14) sont disposés de manière espacée les uns des autres, vus dans le sens de transport (9), dans la deuxième section (10) du transporteur linéaire (6), sachant que l'élément applicateur (13) est disposé côté intérieur et l'élément applicateur (14) est disposé côté extérieur de la surface de transport respective (16.1, 16.2).

3. Dispositif selon la revendication 1 ou 2, **caractérisé en ce que** les guidages de tête (15) sont logés au niveau de traverses transversales (21), qui sont fixées de préférence au niveau d'un élément d'entraînement (23) et sont rotatives.

4. Dispositif selon l'une quelconque des revendications précédentes, **caractérisé en ce que** les guidages de tête (15) présentent un côté de maintien (17) et un côté de guidage (18) disposé de manière à faire face au côté de maintien, sachant qu'un prolongement de commande (19) est disposé au niveau du côté de guidage (18), lequel vient en prise avec un guidage de coulisse (28).

5. Dispositif selon l'une quelconque des revendications précédentes, **caractérisé en ce que** le guidage de tête (15) présente un élément de déplacement (20), qui présente des évidements (22), qui sont traversés par des traverses transversales (21) de sorte que les guidages de tête (15) peuvent être coulissés le long des traverses transversales (21), sachant que les traverses transversales (21) sont logées au niveau des éléments d'entraînement (23).

6. Dispositif selon l'une quelconque des revendications précédentes, **caractérisé en ce que** le guidage de tête (15) présente un élément de liaison (24), qui traverse de manière solidaire en rotation, toutefois de manière mobile en hauteur, un élément de déplacement (20), sachant que l'élément de liaison (24) présente une douille (25), dans laquelle est disposé un arbre (26).

7. Dispositif selon l'une quelconque des revendications précédentes, **caractérisé par** un guidage de coulisse (28) pour le guidage de tête (15), qui est adapté au profil du transporteur linéaire (6).

8. Dispositif selon l'une quelconque des revendications précédentes, **caractérisé en ce que** les guidages de tête (15) peuvent être déplacés, dans le mode conforme à l'usage prévu, dans la troisième section (12) au moyen du guidage de coulisse (28) de manière transversale par rapport au sens de transport (9).

9. Dispositif selon l'une quelconque des revendications précédentes, **caractérisé par** une commande en hauteur (29), qui présente, côté entrée de la première section (10), un passage de retrait (31) se rétrécissant de manière à présenter une forme cunéiforme et, côté sortie de la troisième section (12), un passage de soulèvement (32) s'élargissant de manière cunéiforme, sachant qu'une extrémité libre (34) d'un élément de commande en hauteur (33) est guidé au moins le long des passages (31, 32), sachant que l'élément de commande en hauteur (3) est monté au niveau du guidage de tête (15) de manière à empêcher toute torsion de sorte que le guidage de tête (15) peut être retiré par sa tulipe côté entrée de la première section (10) sur le contenant (3) concerné et peut être soulevé du contenant concerné dans la troisième section (12).

10. Dispositif selon l'une quelconque des revendications précédentes, **caractérisé en ce que** l'élément d'entraînement (23) est formé sous la forme d'un entraînement direct (39) électromagnétique.

11. Dispositif selon l'une quelconque des revendications précédentes, **caractérisé en ce que** l'élément d'entraînement (23) présente une pluralité de guidages de tête (15) pouvant être déplacés individuellement et des éléments de déplacement (20) commandés par came.
